# EUROPEAN PATENT SPECIFICATION

(11) **EP 4 270 621 B1**
(45) Date of publication and mention of the grant of the patent: **15.10.2025**
(21) Application number: 21951005.4
(22) Date of filing: 21.07.2021
(51) Int. Cl.: H01M 50/204, H01M 10/48, H01M 50/325, H01M 50/333, H01M 50/358

(54) **BATTERY PACK ASSEMBLY COMPRISING VENTING DEVICE AND VEHICLE INCLUDING BATTERY PACK ASSEMBLY**
BATTERIEPACKANORDNUNG MIT ENTLÜFTUNGSVORRICHTUNG UND FAHRZEUG MIT DER BATTERIEPACKANORDNUNG
ENSEMBLE BLOC-BATTERIE COMPRENANT UN DISPOSITIF DE VENTILATION ET VÉHICULE COMPRENANT UN ENSEMBLE BLOC-BATTERIE

(43) Date of publication of application: 01.11.2023
(73) Proprietor: LG Energy Solution, Ltd., Seoul 07335 (KR)
(72) Inventor: SONG, Hyeon-Jin, Daejeon 34122 (KR)
(74) Representative: Goddar, Heinz J.
(86) International application number: PCT/KR2021/009449
(87) International publication number: WO 2023/003057

(56) References cited:
- CN-A- 111 341 970
- CN-A- 111 457 151
- CN-U- 209 592 164
- JP-A- 2020 529 570
- KR-A- 20190 023 648
- KR-A- 20220 008 602
- KR-B1- 102 198 047
- KR-B1- 102 262 432
- US-A1- 2021 127 511

## Description

### TECHNICAL FIELD

The present disclosure relates to a battery pack assembly including a venting device, and a vehicle including the battery pack assembly. More specifically, the present disclosure relates a battery pack assembly comprising a venting device that reversibly operates for quickly discharging a gas that causes an internal pressure to rise to the outside when the pressure inside a battery pack rises above a reference pressure and also keeping the battery pack in a sealed state again after the pressure is equalized according to the gas discharge, and a vehicle including the battery pack assembly.

### BACKGROUND ART

When venting of a battery cell occurs inside a battery pack due to overcharging, an internal short circuit caused by failure, or the like, the pressure inside the battery pack suddenly rises. Since the battery pack is generally manufactured to maintain a sealed state, if the internal pressure rises abnormally high as above, there is a risk of deformation and damage of the battery pack.

In order to prevent the internal pressure of a battery pack from rising above a certain level, an element for lowering the internal pressure of the battery pack to the level of atmospheric pressure by being opened when the internal pressure exceeds a certain level, such as a burst disc or a gore vent, is sometime applied to the battery pack itself. However, such venting elements are just disposable elements that cannot be used again once venting is performed.

Therefore, if such devices are applied, the corresponding device must be replaced even when the device is opened due to an internal pressure rise caused by other causes than venting according to an abnormality in the battery cells inside the battery pack, which makes it impossible that the device is used repeatedly.

In addition, if such devices are applied, it is not possible to accurately figure out whether an abnormality occurs at the battery cells inside the battery pack, and therefore, it is difficult to accurately determine whether or not to stop using the battery pack.

US2021/127511A1, CN111341970A and CN111457151A disclose battery packs with venting devices.

### DISCLOSURE

### Technical Problem

The present disclosure is designed to solve the problems of the related art, and therefore the present disclosure is directed to providing battery pack assembly comprising a venting device that reversibly operates for quickly discharging a gas that causes an internal pressure to rise to the outside when the pressure inside a battery pack rises above a reference pressure and also keeping the battery pack in a sealed state again after the pressure is equalized according to the gas discharge.

In addition, the present disclosure is also directed to making it possible to know whether the cause of an increase in internal pressure of the battery pack is due to the generation of gas caused by venting of the battery cell, so that it may be figured out whether to continue or stop the use of the battery pack.

In addition, if venting by the venting device is not smoothly performed despite the increase of the internal pressure of the battery pack, the present disclosure is also directed to evaluating that the venting device has a failure or the battery pack has a problem in sealing, and allowing a user to know this situation and take a quick action.

### Technical Solution

In one aspect of the present disclosure, there is provided a battery pack assembly according to claim 1, comprising a battery pack; and a venting device, which is provided at one side of a battery pack to discharge a venting gas generated in an inner space of the battery pack to the outside, the venting device comprising: a cylinder block configured to communicate with the inside of the battery pack and have a venting gas flow path for discharging the venting gas to the outside; a piston assembly configured to move upward along an extension direction of the cylinder block by receiving a force caused by the increase of the internal pressure of the battery pack so that the inner space of the battery pack communicates with the venting gas flow path; and a magnet unit installed in the cylinder block and configured to restrict upward movement of the piston assembly by a magnetic force so that the communication between the venting gas flow path and the inner space of the battery pack is blocked.

The battery pack assembly further comprises a first sensing unit installed in an inner space of the cylinder block to detect a pressure in the battery pack; and a second sensing unit installed at an upper end of the cylinder block to detect a pressure caused by upward movement of the piston assembly.

The battery pack assembly further comprises an electromagnetic coil configured to surround a part of the piston assembly.

The battery pack assembly further comprises a switch connected between the battery pack and the electromagnetic coil; and a controller configured to output a switching-on signal to electrically connect the battery pack and the electromagnetic coil by the switch when the second sensing unit detects upward movement of the piston assembly and the pressure in the battery pack sensed by the first sensing unit is lower than a preset reference pressure.

The electromagnetic coil generates an electromagnetic force according to the switching-on signal of the controller so that the piston assembly moves downward to block the communication between the venting gas flow path and the inner space of the battery pack.

The controller may be configured to output a failure detection signal for the venting device or a bad sealing detection signal for the battery pack when upward movement of the piston assembly is not detected by the second sensing unit even though a pressure equal to or higher than the reference pressure is detected by the first sensing unit.

The first sensing unit may include a pressure sensor configured to sense the pressure in the battery pack; and a gas detection sensor configured to detect the venting gas in the battery pack.

The controller may be configured to output a venting detection signal for the inside of the battery pack when the first sensing unit detects that the pressure in the battery pack is equal to or higher than the preset reference pressure, the venting gas inside the battery pack is detected, and the second sensing unit detects that the venting gas flow path is opened according to upward movement of the piston assembly.

In another aspect of the present disclosure, there is also provided a vehicle according to claim 5, comprising the battery pack assembly according to an embodiment of the present disclosure.

### Advantageous Effects

According to an embodiment of the present disclosure, when the pressure inside the battery pack rises above a reference pressure, the gas that causes the internal pressure rise is quickly discharged to the outside, and also after the pressure is equalized according to the discharge of the gas, the battery pack may keep a sealed state again.

In addition, according to another embodiment of the present disclosure, it is possible to know whether the cause of the increase of the internal pressure of the battery pack is due to the generation of gas caused by venting of the battery cell, so that the user may figure out whether to continue or stop the use of the battery pack.

According to still another embodiment of the present disclosure, if venting by the venting device is not smoothly performed despite the increase of the internal pressure of the battery pack, it is evaluated that the venting device has a failure or the battery pack has a problem in sealing, so that a user knows this situation and takes a quick action.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is a diagram showing an internal structure of a venting device according to an embodiment of the present disclosure in a state where a piston assembly does not move upward due to venting.
FIG. 3 is a diagram showing the piston assembly applied to the present disclosure.
FIG. 4 is a diagram showing an internal structure of the venting device according to an embodiment of the present disclosure in a state where the piston assembly moves upward due to venting.
FIG. 5 is a diagram for illustrating the connection relationship of an electromagnetic coil, a switch and a battery pack according to the present disclosure.
FIG. 6 is a diagram for illustrating the relationship of a first sensing unit, a second sensing unit, a switch and a controller according to the present disclosure.
FIG. 7 is a diagram for illustrating the relationship of the first sensing unit, the second sensing unit, the switch, the controller and a display unit according to the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the claims.

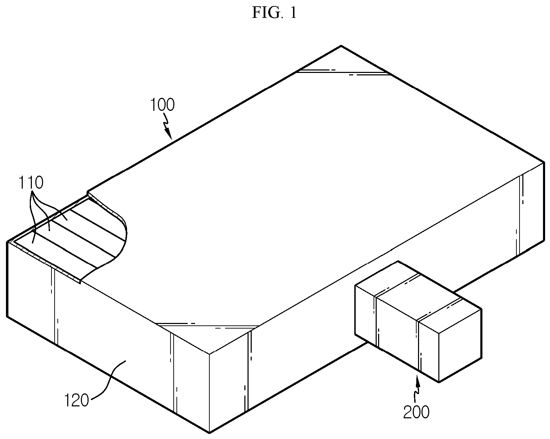

Referring to FIG. 1, a battery pack assembly according to an embodiment of the present disclosure includes a battery pack 100 and a venting device 200 according to an embodiment of the present disclosure provided at one side of the battery pack 100.

The battery pack 100 includes a plurality of battery cells 110 and a pack housing 120 for accommodating the plurality of battery cells 110. The plurality of battery cells 110 are electrically connected to form one cell stack, and the cell stack may be accommodated in the pack housing 120 as it is without a separate housing, or may be provided to be form accommodated in a module housing. If the cell stack is accommodated in the module housing to form a battery module, a module group formed by electrically connecting a plurality of battery modules to each other may be accommodated in the pack housing 120.

The venting device 200 is provided at one side of the battery pack 100 to discharge a venting gas generated in an inner space of the battery pack 100 to the outside. The venting gas may be generated due to overcharging of the battery cell 110 located inside the battery pack 100 or an internal short circuit caused by component damage.

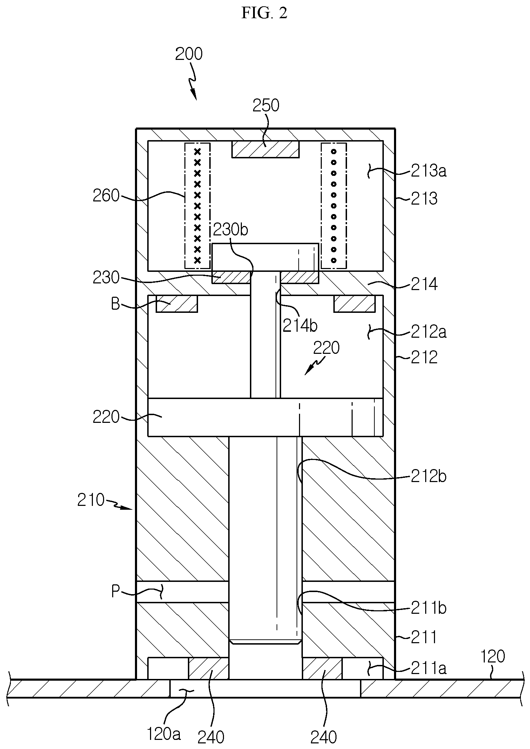

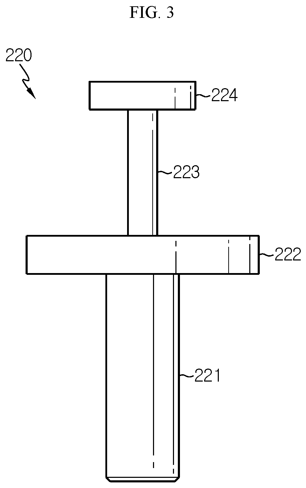

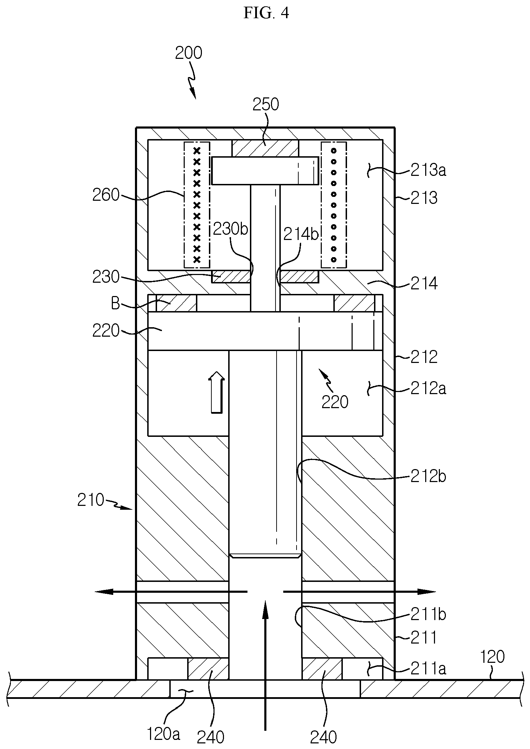

Referring to FIGS. 2 to 4, the venting device 200 according to an embodiment of the present disclosure includes a cylinder block 210, a piston assembly 220 and a magnet unit 230.

The cylinder block 210 has a venting gas flow path P that communicates with the inside of the battery pack 100 and discharges the venting gas to the outside. The venting gas flow path P may be provided to penetrate a side surface of the cylinder block 210. A lower end of the cylinder block 210 is coupled to the pack housing 120. More specifically, the lower end of the cylinder block 210 is coupled to the pack housing 120 to cover a pack hole 120a formed through the pack housing 120.

The cylinder block 210 includes a first block 211 located at a lowermost side, a second block 212 located on the first block 211, a third block 213 located on the second block 212, and a fourth block 214 located between the second block 212 and the third block 213. The first block 211, the second block 212, the third block 213 and the fourth block 214 may be integrally formed. Alternatively, at least some of the first block 211, the second block 212, the third block 213 and the fourth block 214 may be provided as separate parts to be coupled to each other.

The first block 211 has a first space 211a that communicates with the inner space of the pack housing 120 through the pack hole 120a. The first block 211 has a first shaft guide hole 211b above the first space 211a. The first shaft guide hole 211b is formed to extend along an upper and lower direction to provide a space into which a part of the piston assembly 220 is inserted. The inner diameter of the first shaft guide hole 211b may be formed smaller than the width of the first space 211a. The first shaft guide hole 211b guides upward and downward movement of the piston assembly 220.

The second block 212 is located above the first block 211, and the venting gas flow path P communicating with the first space 211a and the first shaft guide hole 211b is provided between the first block 211 and the second block 212. The venting gas flow path P communicates with the first shaft guide hole 211b and the first space 211a if the lower end of the piston assembly 220 leaves the first shaft guide hole 211b and moves upward further due to the upward movement of the piston assembly 220.

The second block 212 has a second shaft guide hole 212b provided above the venting gas flow path P. The inner diameter of the second shaft guide hole 212b may be approximately the same as the inner diameter of the first shaft guide hole 211b. The second shaft guide hole 212b is formed to extend along the upper and lower direction to provide a space into which a part of the piston assembly 220 is inserted. The second shaft guide hole 212b guides upward and downward movement of the piston assembly 220. The second block 212 includes a second space 212a formed above the second shaft guide hole 212b. The width of the second space 212a may be formed larger than the inner diameter of the second shaft guide hole 212b. A part of the piston assembly 220 is accommodated in the second space 212a.

The third block 213 has a third space 213a therein. The fourth block 214 partitions the second space 212a of the second block 212 and the third space 213a of the third block 213 from each other. That is, the fourth block 214 forms the ceiling of the second space 212a and also forms the bottom of the third space 213a. The fourth block 214 has a third shaft guide hole 214b. The third shaft guide hole 214b guides upward and downward movement of the piston assembly 220. The inner diameter of the third shaft guide hole 214b may be smaller than the width of the second space 212a. In addition, the inner diameter of the third shaft guide hole 214b may be formed smaller than the width of the third space 213a.

An upper portion of the piston assembly 220 is accommodated in the third space 213a, and the upper portion of the piston assembly 220 located in the third space 213a moves between a lower end and an upper end of the third space 213a according to the upward and downward movement of the piston assembly 220.

Meanwhile, in this specification, the cylinder block 210 is explained as four separated blocks, but the four blocks just have different names according to their positions along the extension direction (the upper and lower direction in FIGS. 2 to 3) of the cylinder block 210, and as described above, the four blocks constituting the cylinder block 210 may be integrally formed. Alternatively, at least some of the four blocks constituting the cylinder block 210 may be provided as individual parts and may be coupled to each other.

The piston assembly 220 moves upward along the extension direction of the cylinder block 210 by receiving the force caused by the increase of the internal pressure of the battery pack 100 so that the inner space of the battery pack 100 communicates with the venting gas flow path P. The piston assembly 220 includes a first shaft 221 located at a lowermost side, a first piston block 222 connected to an upper end of the first shaft 221, a second shaft 223 connected to an upper portion of the first piston block 222 to extend upward, and a second piston block 224 connected to an upper end of the second shaft 223.

The first shaft 221 is inserted into the first shaft guide hole 211b of the first block 211 and the second shaft guide hole 212b of the second block 212, and its upward and downward movement is guided by the first shaft guide hole 211b and the second shaft guide hole 212b. A lower portion of the first shaft 221 leaves the first shaft guide hole 211b according to the upward movement of the piston assembly 220 so that the venting gas flow path P communicates with the first space 211a through the first shaft guide hole 211b.

The first piston block 222 is connected to the upper end of the first shaft 221 and is located in the second space 212a of the second block 212. The first piston block 222 may have a larger diameter than the first shaft 221. The first piston block 222 is guided to move upward and downward by an inner wall surface of the second space 212a. The first piston block 222 moves between the lower end and the upper end of the second space 212a, and moves upward according to the increase of the internal pressure of the battery pack 100. In order to prevent the first piston block 222 from strongly colliding with the lower surface of the fourth block 214 while the first piston block 222 moves upward due to the increase of the internal pressure of the battery pack 100, a buffering member B such as a spring may be provided at the lower surface of the fourth block 214.

The second shaft 223 is connected to the upper portion of the first piston block 222 and extends upward. The second shaft 223 may have a smaller diameter than the first piston block 222. The second shaft 223 is inserted into the third shaft guide hole 214b, and its upward and downward movement is guided by the third shaft guide hole 214b.

The second piston block 224 is connected to the upper end of the second shaft 223 and is located in the third space 213a of the third block 213. The second piston block 224 may have a larger diameter than the second shaft 223. The second piston block 224 moves between the lower end and the upper end of the third space 213a, and moves upward as the internal pressure of the battery pack 100 increases.

The magnet unit 230 is installed in the cylinder block 210 and restricts the upward movement of the piston assembly 220 by a magnetic force, thereby maintaining that the communication between the venting gas flow path P and the inner space of the battery pack 100 is blocked. In order to realize this function of the magnet unit 230, the magnet unit 230 includes a permanent magnet having a magnetic force within a certain range in consideration of the increase level of the internal pressure of the battery pack 100 due to venting. The magnet unit 230 may be fixed on, for example, the upper surface of the fourth block 214, namely on the lower surface of the third space 213a. In this case, the magnet unit 230 may have a perforated hole 230b corresponding to the third shaft guide hole 214b so that the second shaft 223 passes therethrough. Accordingly, the lower surface of the second piston block 224 connected to the upper end of the second shaft 223 passing through the third shaft guide hole 214b and the perforated hole 230b may be coupled to the upper surface of the magnet unit 230 by the magnetic force of the magnet unit 230. For the magnetic coupling of the magnet unit 230, the second piston block 224 includes a metal that may be attached to a magnet, in its entirety or at least its lower part.

Meanwhile, referring to FIGS. 2 to 4, the venting device 200 according to an embodiment of the present disclosure may further include a first sensing unit 240 and a second sensing unit 250. In addition, the venting device 200 according to an embodiment of the present disclosure may further include an electromagnetic coil 260 that operates according to the sensing results of the first sensing unit 240 and the second sensing unit 250.

The first sensing unit 240 is installed in the inner space of the cylinder block 210 to detect the pressure inside the battery pack 100. To realize this function, the first sensing unit 240 may include a pressure sensor. The first sensing unit 240 is disposed in the first space 211a of the first block 211 and detects the increase of pressure caused by the generation of a venting gas inside the battery pack 100, and provides the sensed pressure value to a controller 280, explained later.

The second sensing unit 250 is installed at an upper end of the cylinder block 210. The second sensing unit 250 detects a pressure generated as the piston assembly 220 moves upward and comes into contact with the sensing unit 250. The second sensing unit 250 comes into contact with the second piston block 224 of the piston assembly 220 when the piston assembly 220 moves upward as the internal pressure of the battery pack 100 increases. The second sensing unit 250 detects the pressure generated accordingly, and provides the sensed pressure value to the controller 280, explained later. The fact that the pressure is detected by the second sensing unit 250 means that the venting gas flow path P is opened to communicate with the inner space of the battery pack 100 according to the upward movement of the piston assembly 220.

The electromagnetic coil 260 is located in the third space 213a of the third block 213. The electromagnetic coil 260 surrounds a part of the piston assembly 220. More specifically, the electromagnetic coil 260 has a coiled shape to surround the entire second piston block 224 of the piston assembly 220, or the entire second piston block 224 and a part of the second shaft 223. The electromagnetic coil 260 applies an electromagnetic force to the second piston block 224, which has moved to the upper end of the third space 213a as the internal pressure of the battery pack 100 increases, so that the second piston block 224 moves downward and is coupled to the magnet unit 230.

The electromagnetic coil 260 is electrically connected to the battery pack 100 when the upward movement of the piston assembly 220 is detected by the second sensing unit 250 and the pressure inside the battery pack 100 sensed by the first sensing unit 240 is lower than a preset reference pressure. The electromagnetic coil 260 electrically connected in this way generates an electromagnetic force to downwardly move the second piston block 224 located inside the electromagnetic coil 260. In a case where the magnetic force by the magnet unit 230 is not applied to the second piston block 224 as the second piston block 224 moves upward farther away from the magnet unit 230, the electromagnetic coil 260 may ensure that the second piston block 224 reliably performs its returning operation.

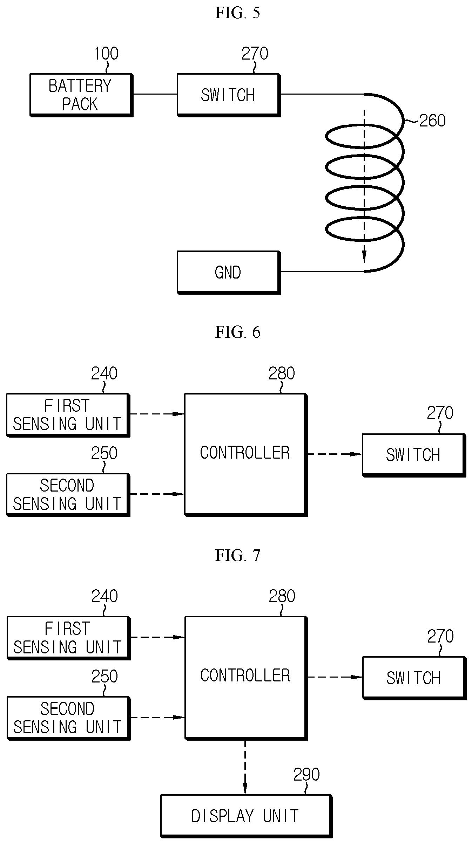

Meanwhile, referring to FIGS. 5 and 6 along with FIGS. 2 to 4, the venting device 200 according to an embodiment of the present disclosure may further include a switch 270 and a controller 280 such that the electromagnetic coil 260 may be operated with reference to the sensing results by the first sensing unit 240 and the second sensing unit 250 as described above.

The switch 270 is connected between the battery pack 100 and the electromagnetic coil 260. The switch 270 may be connected between, for example, a positive electrode terminal of the battery pack 100 and one end of the electromagnetic coil 260, and the other end of the electromagnetic coil 260 may be grounded. Also, the controller 280 determines whether or not to output a switching-on signal with reference to the sensing values of the first sensing unit 240 and the second sensing unit 250. As described above, the controller 280 outputs a switching-on signal when the upward movement of the piston assembly 220 is sensed by the second sensing unit 250 and the pressure inside the battery pack 100 sensed by the first sensing unit 240 is lower than the preset reference pressure. As the switching-on signal is output, the electromagnetic coil 260 is electrically connected, and an electromagnetic force is generated from the top to the bottom according to the coiling direction, so that the second piston block 224 located inside the electromagnetic coil 260 moves downward. As the second piston block 224 moves downward and is coupled with the magnet unit 230, the communication between the venting gas flow path P and the first space 211a is blocked by the first shaft 221.

Referring to FIG. 7 along with FIGS. 2 to 5, the venting device 200 according to an embodiment of the present disclosure may further include a display unit 290 that displays the state of the battery pack 100 according to the sensing results of the first sensing unit 240 and the second sensing unit 250.

In this case, if the upward movement of the piston assembly 220 is not detected by the second sensing unit 250 even though the first sensing unit 240 detects a pressure equal to or higher than the preset reference pressure, the controller 280 outputs a failure detection signal for the venting device 200 or a bad sealing detection signal for the batter pack 100. The display unit 290 enables the user to know that a failure occurs at the venting device 200 or a sealing failure occurs at the battery pack 100 by means of a visual and/or audible notification according to these detection signals output from the controller 280.

Meanwhile, the first sensing unit 240 may further include a gas detection sensor capable of detecting a venting gas leaking from the battery cell 110 and present in the battery pack 100, in addition to the pressure sensor. In this case, the controller 280 outputs a venting detection signal for the inside of the battery pack 100 if the first sensing unit 240 detects that the pressure inside the battery pack 100 is equal to or higher than the preset reference pressure, the generation of venting gas inside the battery pack 100 is detected, and the second sensing unit 250 detects that the venting gas flow path P is opened according to the upward movement of the piston assembly 220. The display unit 290 allows the user to know that venting occurs inside the battery pack 100 by means of a visual and/or audible notification according to the detection signals output from the controller 280.

As described above, the battery pack assembly according to claim 1 includes the venting device 200 that operates in response to an increase of the internal pressure caused by venting in the battery pack 100 or other reasons, thereby eliminate thing risk of ignition and/or explosion caused by the increase of the internal pressure. In addition, according to the present disclosure, the battery pack 100 and the venting device 200 may be repeatedly used by applying a structure in which the venting gas flow path P, which is opened according to an increase in internal pressure, can be closed again using an electromagnetic force.

Meanwhile, a vehicle according to claim 5 includes the battery pack assembly according to claims 1-4. The vehicle operates by receiving a power by the battery pack 100 provided in the battery pack assembly of the present disclosure. The safety of the vehicle in use is greatly improved by the venting device 200 of the present disclosure provided in the battery pack assembly.

## Claims

1. A battery pack assembly comprising a battery pack; and
a venting device (200), which is provided at one side of a battery pack (100) to discharge a venting gas generated in an inner space of the battery pack (100) to the outside, the venting device (200) comprising:
a cylinder block (210) configured to communicate with the inside of the battery pack (100) and have a venting gas flow path (P) for discharging the venting gas to the outside;
a piston assembly (220) configured to move upward along an extension direction of the cylinder block (210) by receiving a force caused by the increase of the internal pressure of the battery pack (100) so that the inner space of the battery pack (100) communicates with the venting gas flow path (P);
a magnet unit (230) installed in the cylinder block (210) and configured to restrict upward movement of the piston assembly (220) by a magnetic force so that the communication between the venting gas flow path (P) and the inner space of the battery pack (100) is blocked;
a first sensing unit (240) installed in an inner space of the cylinder block (210) to detect a pressure in the battery pack (100);
a second sensing unit (250) installed at an upper end of the cylinder block (210) to detect a pressure caused by upward movement of the piston assembly (220);
an electromagnetic coil (260) configured to surround a part of the piston assembly (220);
a switch (270) connected between the battery pack (100) and the electromagnetic coil (260); and
a controller (280) configured to output a switching-on signal to electrically connect the battery pack (100) and the electromagnetic coil (260) by the switch (270) when the second sensing unit (250) detects upward movement of the piston assembly (220) and the pressure in the battery pack (100) sensed by the first sensing unit (240) is lower than a preset reference pressure,
wherein the electromagnetic coil (260) generates an electromagnetic force according to the switching-on signal of the controller (280) so that the piston assembly (220) moves downward to block the communication between the venting gas flow path (P) and the inner space of the battery pack (100).

2. The battery pack assembly according to claim 1,
wherein the controller (280) is configured to output a failure detection signal for the venting device (200) or a bad sealing detection signal for the battery pack (100) when upward movement of the piston assembly (220) is not detected by the second sensing unit (250) even though a pressure equal to or higher than the reference pressure is detected by the first sensing unit (240).

3. The battery pack assembly according to claim 1,
wherein the first sensing unit (240) includes:
a pressure sensor configured to sense the pressure in the battery pack (100); and
a gas detection sensor configured to detect the venting gas in the battery pack (100).

4. The battery pack assembly according to claim 3,
wherein the controller (280) is configured to output a venting detection signal for the inside of the battery pack (100) when the first sensing unit (240) detects that the pressure in the battery pack (100) is equal to or higher than the preset reference pressure, the venting gas inside the battery pack (100) is detected, and the second sensing unit (250) detects that the venting gas flow path (P) is opened according to upward movement of the piston assembly (220).

5. A vehicle, comprising the battery pack assembly according to any one of claims 1 to 4.

## Patentansprüche

1. Batteriepackanordnung aufweisend einen Batteriepack und eine Entlüftungsvorrichtung (200), die an einer Seite des Batteriepacks (100) vorgesehen ist, um ein in einem Innenraum des Batteriepacks (100) erzeugtes Entlüftungsgas nach außen abzugeben, wobei die Entlüftungsvorrichtung (200) umfasst:
einen Zylinderblock (210), der konfiguriert ist, mit dem Inneren des Batteriepacks (100) in Verbindung zu stehen und einen Entlüftungsgasströmungsweg (P) zum Abgeben des Entlüftungsgases nach außen aufweist;
eine Kolbenanordnung (220), die konfiguriert ist, sich entlang einer Erstreckungsrichtung des Zylinderblocks (210) durch Empfangen einer Kraft, die durch die Erhöhung des Innendrucks des Batteriepacks (100) verursacht wird, nach oben zu bewegen, so dass der Innenraum des Batteriepacks (100) mit dem Entlüftungsgasströmungsweg (P) in Verbindung gesetzt wird;
eine Magneteinheit (230), die in dem Zylinderblock (210) installiert ist und konfiguriert ist, eine Aufwärtsbewegung der Kolbenanordnung (220) durch eine Magnetkraft zu beschränken, so dass die Verbindung zwischen dem Entlüftungsgasströmungsweg (P) und dem Innenraum des Batteriepacks (100) blockiert wird;
eine erste Erfassungseinheit (240), die in einem Innenraum des Zylinderblocks (210) installiert ist, um einen Druck in dem Batteriepack (100) zu erfassen;
eine zweite Erfassungseinheit (250), die an einem oberen Ende des Zylinderblocks (210) installiert ist, um einen durch eine Aufwärtsbewegung der Kolbenanordnung (220) verursachten Druck zu erfassen;
eine elektromagnetische Spule (260), die konfiguriert ist, einen Teil der Kolbenanordnung (220) zu umgeben;
einen Schalter (270), der zwischen dem Batteriepack (100) und der elektromagnetischen Spule (260) verbunden ist; und
eine Steuerung (280), die konfiguriert ist, ein Einschaltsignal auszugeben, um den Batteriepack (100) und die elektromagnetische Spule (260) durch den Schalter (270) elektrisch zu verbinden, wenn die zweite Erfassungseinheit (250) eine Aufwärtsbewegung der Kolbenanordnung (220) erfasst und der durch die erste Erfassungseinheit (240) erfasste Druck in dem Batteriepack (100) niedriger als ein voreingestellter Referenzdruck ist,
wobei die elektromagnetische Spule (260) eine elektromagnetische Kraft gemäß dem Einschaltsignal der Steuerung (280) erzeugt, so dass sich die Kolbenanordnung (220) nach unten bewegt, um die Verbindung zwischen dem Entlüftungsgasströmungsweg (P) und dem Innenraum des Batteriepacks (100) zu blockieren.

2. Batteriepackanordnung nach Anspruch 1,
wobei die Steuerung (280) konfiguriert ist, ein Fehlererfassungssignal für die Entlüftungsvorrichtung (200) oder ein Erfassungssignal einer schlechten Abdichtung für den Batteriepack (100) auszugeben, wenn eine Aufwärtsbewegung der Kolbenanordnung (220) durch die zweite Erfassungseinheit (250) nicht erfasst wird, obwohl ein Druck, der gleich oder höher als der Referenzdruck ist, durch die erste Erfassungseinheit (240) erfasst wird.

3. Batteriepackanordnung nach Anspruch 1,
wobei die erste Erfassungseinheit (240) aufweist:
einen Drucksensor, der konfiguriert ist, den Druck in dem Batteriepack (100) zu erfassen; und
einen Gaserfassungssensor, der konfiguriert ist, das Entlüftungsgas in dem Batteriepack (100) zu erfassen.

4. Batteriepackanordnung nach Anspruch 3,
wobei die Steuerung (280) konfiguriert ist, ein Entlüftungserfassungssignal für das Innere des Batteriepacks (100) auszugeben, wenn die erste Erfassungseinheit (240) erfasst, dass der Druck in dem Batteriepack (100) gleich oder höher als der voreingestellte Referenzdruck ist, das Entlüftungsgas innerhalb des Batteriepacks (100) erfasst wird und die zweite Erfassungseinheit (250) erfasst, dass der Entlüftungsgasströmungsweg (P) gemäß einer Aufwärtsbewegung der Kolbenanordnung (220) geöffnet wird.

5. Fahrzeug, das die Batteriepackanordnung nach einem der Ansprüche 1 bis 4 aufweist.

## Revendications

1. Ensemble de bloc-batterie comprenant un bloc-batterie ; et
un dispositif d'évent (200), agencé sur un côté d'un bloc-batterie (100) pour évacuer à l'extérieur un gaz d'évent généré dans un espace intérieur du bloc-batterie (100), le dispositif d'évent (200) comprenant :
un bloc-cylindres (210) configuré pour communiquer avec l'intérieur du bloc-batterie (100) et disposer d'un chemin d'écoulement du gaz d'évent (P) pour évacuer le gaz d'évent à l'extérieur ;
un ensemble piston (220) configuré pour se déplacer vers le haut dans un sens d'extension du bloc-cylindres (210) en recevant une force causée par l'augmentation de la pression interne du bloc-batterie (100), de sorte que l'espace intérieur du bloc-batterie (100) communique avec le chemin d'écoulement du gaz d'évent (P) ;
un dispositif d'aimant (230) installé dans le bloc-cylindres (210), et configuré pour restreindre le mouvement vers le haut de l'ensemble piston (220) par une force magnétique, de sorte que la communication entre le chemin d'écoulement du gaz d'évent (P) et l'espace intérieur du bloc-batterie (100) soit bloquée ;
un premier module de détection (240) installé dans un espace intérieur du bloc-cylindres (210) pour détecter une pression dans le bloc-batterie (100) ;
un deuxième module de détection (250) installé à une extrémité supérieure du bloc-cylindres (210) pour détecter une pression causée par un mouvement vers le haut de l'ensemble piston (220) ;
une bobine électromagnétique (260) configurée pour entourer une partie de l'ensemble piston (220);
un commutateur (270) connecté entre le bloc-batterie (100) et la bobine électromagnétique (260) ; et
une commande (280) configurée pour émettre un signal d'activation afin d'effectuer la connexion électrique du bloc-batterie (100) et de la bobine électromagnétique (260) par le commutateur (270), lorsque le deuxième module de détection (250) détecte un mouvement vers le haut de l'ensemble piston (220), et la pression dans le bloc-batterie (100), détectée par le premier module de détection (240), est inférieure à une pression de référence prédéfinie,
la bobine électromagnétique (260) générant une force électromagnétique en fonction du signal d'activation de la commande (280), de sorte que l'ensemble piston (220) se déplace vers le bas pour bloquer la communication entre le chemin d'écoulement du gaz d'évent (P) et l'espace intérieur du bloc-batterie (100).

2. Ensemble de bloc-batterie selon la revendication 1,
la commande (280) étant configurée pour émettre un signal de détection de défaillance pour le dispositif d'évent (200) ou un signal de détection de défaut d'étanchéité pour le bloc-batterie (100) lorsque le mouvement vers le haut de l'ensemble piston (220) n'est pas détecté par le deuxième module de détection (250), même si une pression égale ou supérieure à la pression de référence est détectée par le premier module de détection (240).

3. Ensemble de bloc-batterie selon la revendication 1,
le premier module de détection (240) comprenant :
un capteur de pression configuré pour détecter la pression dans le bloc-batterie (100) ; et
un capteur de détection de gaz configuré pour détecter le gaz d'évent dans le bloc-batterie (100).

4. Ensemble de bloc-batterie selon la revendication 3,
la commande (280) étant configurée pour émettre un signal de détection d'évent pour l'intérieur du bloc-batterie (100) lorsque le premier module de détection (240) détecte que la pression dans le bloc-batterie (100) est égale ou supérieure à la pression de référence prédéfinie, le gaz d'évent à l'intérieur du bloc-batterie (100) est détecté, et le deuxième module de détection (250) détecte que le chemin d'écoulement du gaz d'évent (P) est ouvert d'après le déplacement vers le haut de l'ensemble piston (220).

5. Véhicule comprenant l'ensemble de bloc-batterie selon une quelconque des revendications 1 à 4.
